# DEMANDE DE BREVET EUROPEEN

(11) **EP 3 388 660 A1**
(43) Date de publication de la demande: **17.10.2018**
(21) Numéro de dépôt: 18165718.0
(22) Date de dépôt: 04.04.2018
(51) Int. Cl.: F02M 37/22, B01D 35/147, B01D 35/153, B01D 35/16, B01D 36/00, B01D 29/96

(54) **FILTRE A GASOIL AVEC SYSTEME DE PURGE AMELIORE**

(30) Priorité: 12.04.2017 TN 201700146
(71) Demandeur: Société Tunisienne des Filtres (MISFAT), 1124 Manouba (TN)
(72) Inventeur: GUERMAZI, Mohamed, 1124 MANOUBA (TN); ZAFFATI, Said, 1124 MANOUBA (TN); BOUALLOUS, Hamza, 1124 MANOUBA (TN); KALAI, Nedra, 1124 MANOUBA (TN)
(74) Mandataire: Cabinet Beau de Loménie

(57) **Abrégé**

Filtre (10) pour la purification d'un liquide de moteur, comprenant
- un boitier (1) définissant un volume interne,
- un élément filtrant (2) disposé au sein du volume interne dudit boitier (1),
le boitier (1) présentant un conduit de purge (5) configuré de manière à permettre une purge du liquide présent au sein du volume interne, et un dispositif de purge adapté pour sélectivement obturer ledit conduit de purge (5),
le filtre étant **caractérisé en ce que** le dispositif de purge comprend un obturateur (7) mobile en translation au sein du conduit de purge (5) entre une position d'obturation dans laquelle l'obturateur obture le conduit de purge (5), et une position ouverte dans laquelle ledit obturateur (7) permet un passage de liquide,
ledit obturateur (7) présente une extrémité libre (72) faisant saillie hors de la première portion (5A) du conduit de purge (5) via sa seconde extrémité (5A2), et est associé via son extrémité libre (72) à un actionneur (8) disposé hors du volume interne du boitier (1) et adapté pour commander la translation de l'obturateur (7) dans la première portion (5A) du conduit de purge (5).

## Description

### DOMAINE DE L'INVENTION

La présente invention concerne le domaine des filtres, et plus particulièrement les éléments filtrants, par exemple pour gasoil, trouvant notamment une application dans le domaine automobile.

### ETAT DE LA TECHNIQUE ANTERIEURE

Les filtres pour véhicule automobile comprennent communément des moyens permettant de réaliser la purge du filtre.

On connait ainsi plusieurs exemples de structures de filtres dans lesquels les boitiers sont munis de tiges de purges traversant le boitier de filtre afin de permettre à un utilisateur de facilement actionner une purge du boitier via un conduit disposé sous le boitier. De telles tiges de purge sont cependant contraignantes à la fois pour la conception du filtre et pour sa manipulation lors du remplacement de l'élément filtrant, dans la mesure où elles traversent le boitier du filtre et nécessitent donc la réalisation de multiples zones d'étanchéité et nécessitent une remise en position précise lors du remplacement de l'élément filtrant. Le document FR 28826661 présente ainsi un tel exemple de filtre.

Le présent exposé vise ainsi à répondre au moins partiellement à ces problématiques.

### PRESENTATION DE L'INVENTION

Le présent exposé concerne un filtre pour la purification d'un liquide de moteur, comprenant
- un boitier définissant un volume interne,
- un élément filtrant disposé au sein du volume interne dudit boitier,
le boitier présentant un orifice d'admission et un orifice de refoulement de liquide débouchant chacun dans le volume interne dudit boitier, l'orifice d'admission et l'orifice de refoulement étant configurés de manière à définir une circulation de liquide dans laquelle le liquide entrant par l'orifice d'admission passe au travers de l'élément filtrant avant de ressortir par l'orifice de refoulement,
ledit boitier présentant en outre un conduit de purge configuré de manière à permettre une purge du liquide présent au sein du volume interne, et un dispositif de purge adapté pour sélectivement obturer ledit conduit de purge,
le filtre étant caractérisé en ce que
le conduit de purge présente une première portion (t une seconde portion non alignées l'une par rapport à l'autre, la première portion présentant une première extrémité débouchant dans le volume interne du boitier, et une seconde extrémité ouverte, et étant reliée à la seconde portion du conduit de purge via une section intermédiaire entre la première extrémité et la seconde extrémité,
le dispositif de purge comprend un obturateur mobile en translation au sein de la première portion du conduit de purge entre une position d'obturation dans laquelle l'obturateur obture la première portion du conduit de purge en amont de la section intermédiaire, et une position ouverte dans laquelle ledit obturateur permet un passage de liquide entre la première portion et la seconde portion du conduit de purge,
ledit obturateur présente une extrémité libre faisant saillie hors de la première portion du conduit de purge via sa seconde extrémité, et est associé via son extrémité libre à un actionneur disposé hors du volume interne du boitier et adapté pour commander l'ouverture de l'obturateur dans la première portion du conduit de purge.

Selon un exemple, l'extrémité libre de l'obturateur coopère avec l'actionneur de sorte qu'un mouvement de l'actionneur entraine l'ouverture de l'orifice de purge.

Selon un exemple, l'obturateur est muni d'un joint d'étanchéité adapté pour coopérer avec la première portion du conduit de purge en amont de sa liaison avec la seconde portion du conduit de purge de manière à l'obturer lorsque l'obturateur est en position d'obturation.

Selon un exemple, l'actionneur présente un limiteur de course entre une position dans laquelle l'obturateur est en position d'obturation et une position dans laquelle l'obturateur est dans une position d'ouverture.

Selon un exemple, le boitier comprend un cache disposé hors du volume interne, et dans lequel est disposé l'actionneur.

Selon un exemple, le filtre comprend en outre une commande coopérant avec l'actionneur au moyen de cannelures.

Selon un exemple, le boitier comprend un orifice d'admission secondaire débouchant dans le volume interne du boitier, ledit orifice d'admission secondaire étant muni d'un clapet de déviation, configuré de manière à être passant lorsqu'une pression supérieure à une valeur seuil de pression est appliquée.

Selon un exemple, l'élément filtrant comprend un média filtrant disposé entre un flasque inférieur et un flasque supérieur, le flasque supérieur étant muni d'un tube traversant s'étendant de part et d'autre du flasque supérieur et adapté pour coopérer avec l'orifice de refoulement du boitier, ledit tube traversant comprenant un orifice de dégazage configuré de manière à permettre un passage d'air depuis un volume interne de l'élément filtrant vers l'orifice de refoulement du boitier.

Le présent exposé concerne également un véhicule muni d'un tel filtre.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue d'ensemble d'un filtre selon un aspect de l'invention,
- la figure 2 est une vue en coupe d'un tel filtre,
- les figures 3 et 4 sont des vues détaillées en coupe partielle
- les figure 5 et 6 sont des vues détaillées d'éléments spécifiques du filtre proposé,
- la figure 7 est une autre vue en coupe d'un tel filtre.

Sur l'ensemble des figures, les éléments en commun sont repérés par des références numériques identiques.

### DESCRIPTION DETAILLEE D'EXEMPLES DE REALISATION

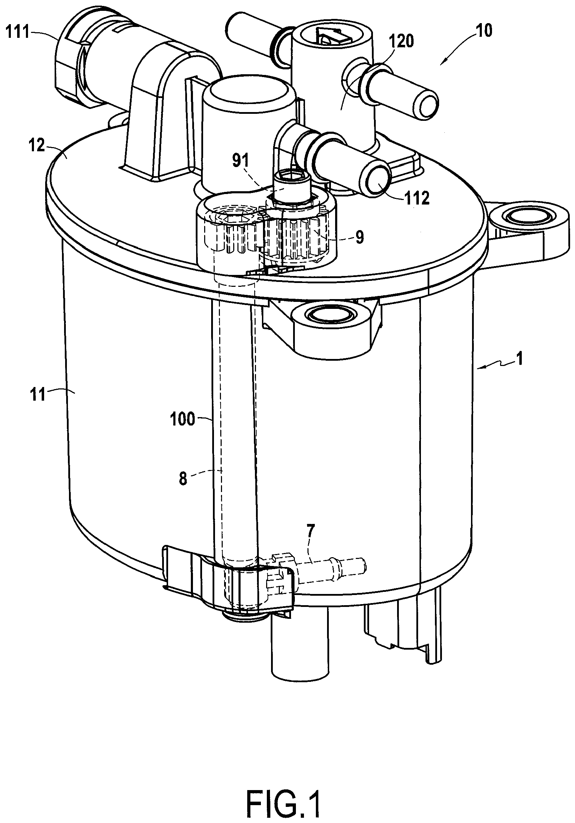

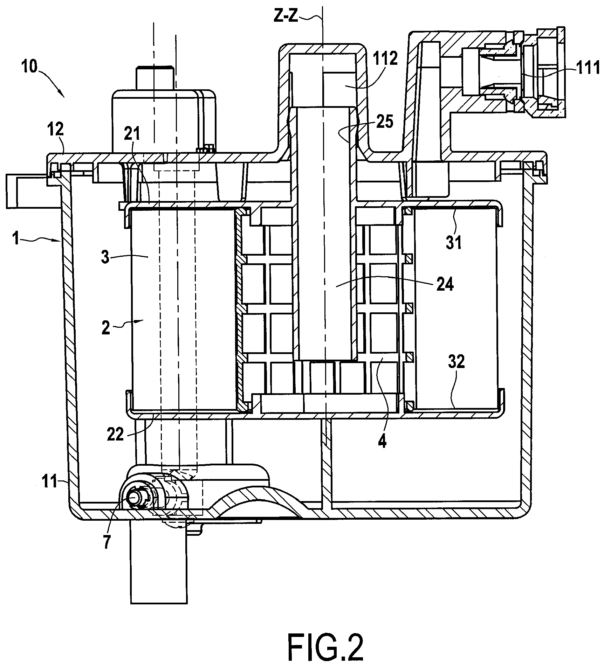

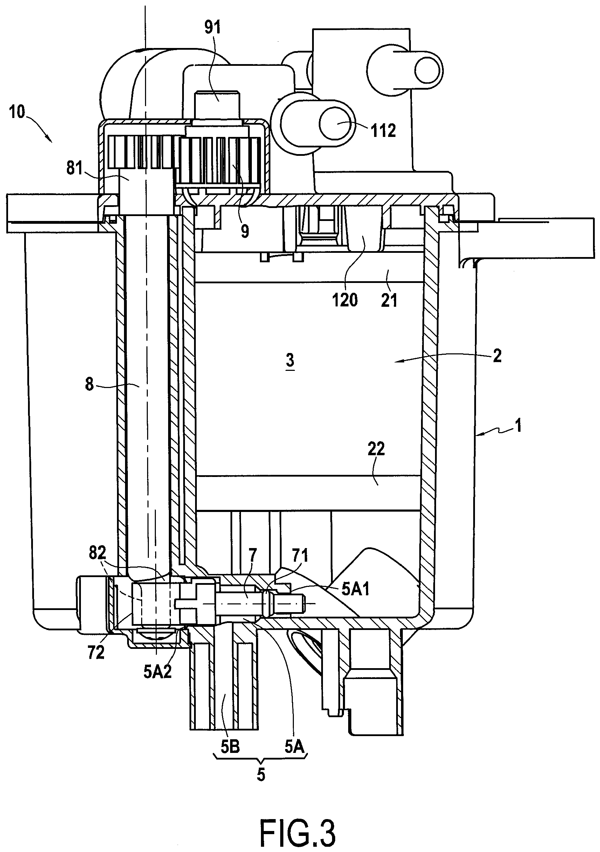

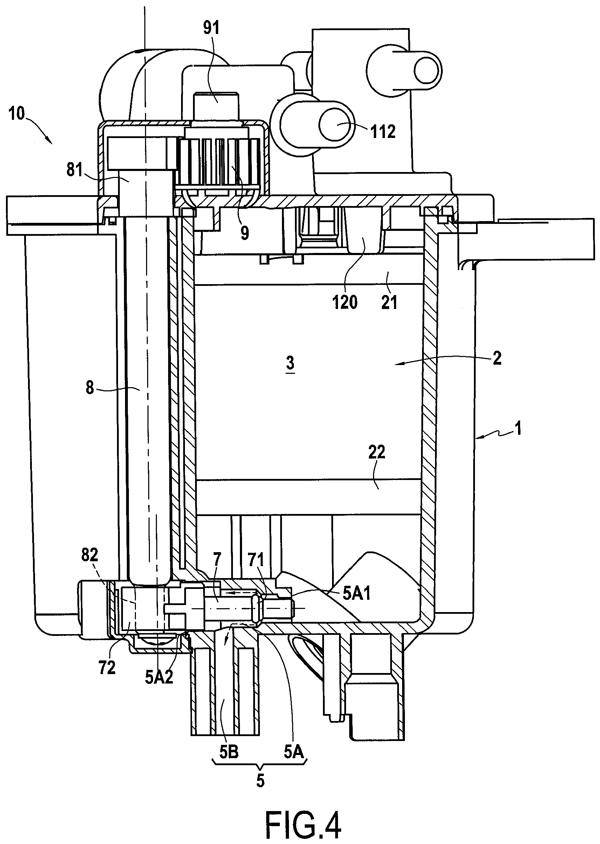

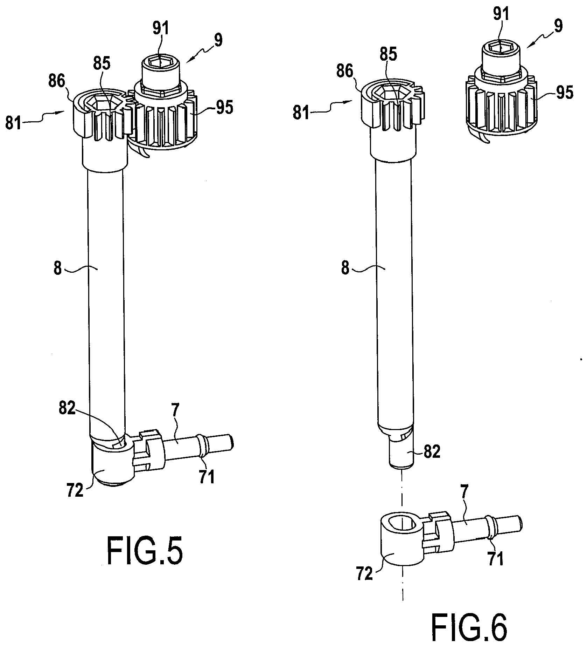

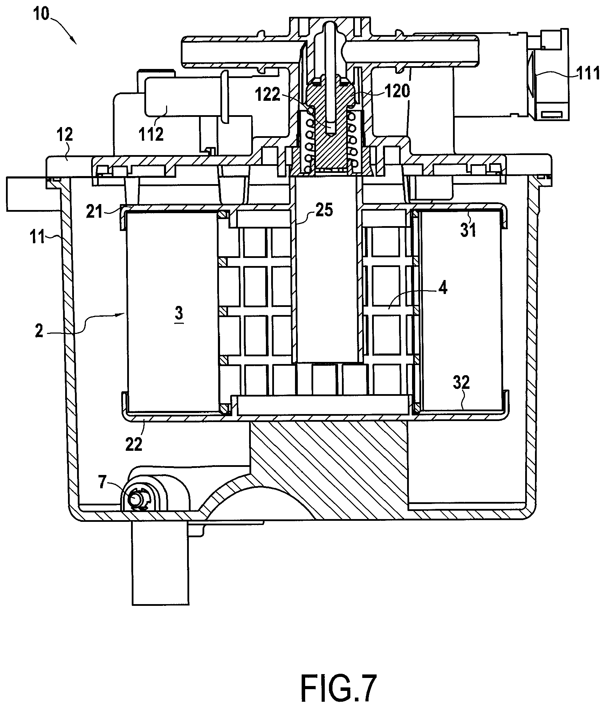

Les figures 1 et 2 sont deux vues respectivement en perspective et en coupe d'un filtre selon un aspect de l'invention. Les figures 3 et 4 sont des vues en coupe permettant de visualiser le détail de certains éléments de ce filtre. Les figures 5 et 6 sont deux vues illustrant les détails de certains composants du filtre, et la figure 7 est une vue en coupe selon un autre plan de ce filtre.

Le filtre 10 tel que représenté comprend un boitier 1 formé d'une base 11 et d'un couvercle 12 définissant un volume interne dans lequel est disposé un élément filtrant 2.

L'élément filtrant 2 tel que présenté a une forme générale cylindrique de révolution. Il comprend un média filtrant 3 s'étendant selon un axe longitudinal Z-Z, et présentant une extrémité proximale 31 et une extrémité distale 32. Le média filtrant 3 définit un conduit interne 34 s'étendant selon l'axe longitudinal Z-Z.

Les dénominations « proximale » et « distale » sont arbitraires, et visent uniquement à permettre une distinction entre les différents éléments.

Le média filtrant 3 est adapté pour réaliser une séparation des impuretés présentes dans un fluide le traversant tel que du gasoil.

Le média filtrant 3 est interposé entre deux flasques ; un flasque proximal 21 et un flasque distal 22.

Le flasque proximal 21 est monté sur l'extrémité proximale 31 du média filtrant 3 et comprend typiquement un orifice 24 s'étendant dans le prolongement du conduit interne 34 du média filtrant 10 selon l'axe longitudinal Z-Z. Le flasque proximal 21 tel que représenté comprend un tube 25 s'étendant de part et d'autre de son orifice 24, et venant s'engager de manière étanche avec un conduit de refoulement menant à un orifice de refoulement du boitier 1 du filtre 10, ici formé dans le couvercle 12 du boitier.

Le tube 25 est typiquement muni d'un ou plusieurs orifices de dégazage configurés de manière à permettre un passage d'air depuis un volume interne à l'élément filtrant vers l'orifice de refoulement du boitier 1. De tels orifices de refoulement sont typiquement aménagés à proximité du flasque supérieur 21, de manière à permettre d'évacuer de l'air qui pourrait s'accumuler dans la partie supérieure de l'élément filtrant 2.

Le flasque distal 22 est monté sur l'extrémité distale 32 du média filtrant 3. Le flasque distal 22 est typiquement dépourvu d'orifice, et présente donc une forme générale de disque, obturant de ce fait le conduit interne 34 du média filtrant 3 au niveau de son extrémité distale.

Dans l'exemple représenté, l'élément filtrant 3 comprend une armature interne 4 s'étendant entre le flasque proximal 21 et le flasque distal 22 et permettant notamment d'améliorer les propriétés mécaniques de l'élément filtrant 2 et ainsi de protéger le média filtrant 3 par exemple contre un risque d'écrasement.

Le boitier 1 du filtre 10, ici plus précisément le couvercle 11 du boitier 1 est muni d'un orifice d'admission 111 et d'un orifice de refoulement 112 par lesquels un liquide entre et sort respectivement du filtre 10. Le filtre 10 est configuré de manière à ce que le liquide pénétrant au sein du boitier 1 via l'orifice d'admission 111 doive nécessairement passer au travers du média filtrant 3 de l'élément filtrant 2 avant de pouvoir ressortir par l'orifice de refoulement 112. Le média filtrant 3 définit ainsi une zone propre et une zone sale au sein du filtre 10, la zone propre étant la zone du volume interne du boitier contenant le liquide après son passage au travers du média filtrant 3, tandis que la zone sale est la zone du volume interne du boitier contenant le liquide avant son passage au travers du média filtrant 3.

Le boitier 1 comprend un conduit de purge 5 configuré de manière à permettre une purge du liquide présent au sein du volume interne, et un dispositif de purge 6 adapté pour sélectivement obturer ledit conduit de purge 5. Le conduit de purge 5 tel que représenté débouche dans la partie inférieure de la base 11 du boitier 1

Le conduit de purge 5 tel que représenté est formé de deux sections désaxées l'une par rapport à l'autre ; une première section 5A débouchant dans le volume interne du boitier 1 et s'étendant sensiblement radialement par rapport à un axe central du boitier 1, et une seconde section 5B s'étendant ici perpendiculairement à la première section 5A.

La première section 5A présente une première extrémité 5A1 débouchant dans le volume interne du boitier 1, et une seconde extrémité 5A2 débouchant dans le milieu externe. La seconde section 5B est reliée à la première section 5A à un niveau intermédiaire entre la première extrémité 5A1 et la deuxième extrémité 5A2 de la première section 5A.

Le dispositif de purge 6 tel que représenté comprend trois éléments ; un obturateur 7, un actionneur 8 et une commande 9.

L'obturateur 7 est monté coulissant au sein du conduit de purge 5, ici plus précisément au sein de la première section 5A du conduit de purge 5. L'obturateur 7 présente une première extrémité munie d'un élément d'étanchéité 71 adapté pour permettre d'obturer de manière étanche le conduit de purge 5, et présente une extrémité libre 72 faisant saillie de la première section 5A du conduit de purge 5 via sa seconde extrémité 5A2.

L'actionneur 8 s'étend ici perpendiculairement à l'obturateur 7. L'actionneur 8 présente une extrémité supérieure 81 typiquement réalisée de manière à faire saillie au-delà du couvercle 12 du boitier 1, et une extrémité inférieure 82 coopérant avec l'extrémité libre 72 de l'obturateur 7. L'actionneur 8 est monté tournant selon un axe de rotation perpendiculaire à un axe central de la première section 5A du conduit de purge 5, et coopère avec l'obturateur 7 de sorte qu'un mouvement de rotation de l'actionneur 8 entraine un déplacement en translation de l'obturateur 7 au sein de la première section 5A du conduit de purge 5 selon un mouvement de va et vient. L'extrémité inférieure 82 de l'actionneur 8 comprend ainsi typiquement un ergot excentré par rapport à l'axe de rotation de l'actionneur 8, tandis que l'extrémité libre 72 de l'obturateur 7 présente un logement oblong dans lequel est inséré cet ergot, une telle structure permettant de réaliser une transformation du mouvement de rotation de l'actionneur 8 en mouvement de translation de l'obturateur 7. On comprend qu'un tel mode de réalisation est uniquement indiqué à titre d'exemple, et que d'autres modes de réalisation peuvent être réalisés.

L'extrémité supérieure 82 de l'actionneur 8 telle que représentée coopère avec la commande 9, qui est ici monté tournante sur le couvercle 12 du boitier 1. L'extrémité supérieure 82 de l'actionneur 8 et la commande 9 sont munies d'indentations permettant de transmettre un mouvement de rotation entre ces deux éléments soit selon un rapport 1 :1, soit selon un rapport supérieur ou inférieur à 1. La commande 9 telle que représentée présente une extrémité libre 91 adaptée pour coopérer avec un outil tel qu'une clé Allen, afin qu'un utilisateur puisse appliquer un mouvement de rotation à la commande 9.

Ainsi, un utilisateur peut appliquer un mouvement de rotation à la commande 9, qui va alors entrainer l'actionneur 8 en rotation, qui va à son tour entrainer l'obturateur 7 en translation dans la première section 5A du conduit de purge 5 selon un mouvement de va et vient. On comprend que la commande 9 est optionnelle, et qu'en variante, on peut appliquer directement un mouvement de rotation à l'actionneur 8 qui va entrainer l'obturateur 7 en translation dans la première section 5A du conduit de purge 5.

Le mouvement de translation de l'obturateur 7 dans la première section 5A du conduit de purge 5 permet de piloter le déplacement de l'obturateur 7 entre une position d'obturation dans laquelle il obture la première extrémité 5A1 de la première section 5A du conduit de purge 5, et une position ouverte dans laquelle il permet un passage de fluide via la première extrémité 5A1 de la première section 5A du conduit de purge 5.

La figure 3 représente l'obturateur 7 en position d'obturation, tandis que la figure 4 représente l'obturateur 7 en position ouverte. On voit sur ces figures que le passage d'une position à l'autre s'effectue par une translation de l'obturateur 7 dans la première section 5A du conduit de purge 5. Comme indiqué précédemment, le pilotage du déplacement de l'obturateur est réalisé via l'actionneur 8 et le cas échéant la commande 9, dont le mouvement en rotation est transformé via la liaison entre l'actionneur 8 et l'obturateur 7 en mouvement de translation en va et vient.

Afin de faciliter le positionnement de l'obturateur 7 par l'utilisateur, la rotation de l'actionneur 8 et/ou le cas échéant la commande 9 peuvent être limitées. On comprend en effet qu'une rotation de 180° de l'actionneur 8 permet d'obtenir l'amplitude maximale de translation de l'obturateur 7 au sein de la première section 5A du conduit de purge 5. Ainsi, l'obturateur 7, l'actionneur 8 et le cas échéant la commande 9 sont typiquement configurés de manière à ce qu'une rotation d'une amplitude prédéterminée de l'actionneur ou le cas échéant de la commande 9 entraine le déplacement de l'obturateur 7 de la position d'obturation à la position ouverte.

Dans l'exemple représenté, l'actionneur 8 et la commande 9 coopèrent au moyen de portions crantées, respectivement 85 et 95. Afin de limiter le mouvement en rotation de l'actionneur 8, sa portion crantée 85 coopérant avec la commande 9 ne s'étend que sur un secteur angulaire prédéterminé, par exemple 180°, le secteur angulaire restant étant typiquement formé par une butée 86 comme on le voit par exemple sur les figures 5 et 6. Une telle structure permet de limiter structurellement la rotation de l'actionneur 8, et ainsi de permettre à l'utilisateur de s'assurer que la rotation effectuée va déplacer l'obturateur 7 dans la position souhaitée.

A l'utilisation, on peut ainsi réaliser une purge du volume interne du carter 1 en actionnant l'obturateur 7 par l'intermédiaire de l'actionneur 8 et le cas échéant de la commande 9, de manière à provoquer un échappement du liquide présent dans le volume interne du carter par le conduit de purge 5. Le fluide sort alors du volume interne du carter 1 via le conduit de purge, successivement via la première section 5A et la seconde section 5B du conduit de purge 5.

Il a été constaté lors de tests que la liaison entre l'obturateur 7 et la deuxième extrémité 5A2 de la première section 5A du conduit de purge 5 ne nécessite pas d'être étanche, le liquide tendant naturellement à passer par la seconde section 5B du conduit de purge 5. La liaison entre l'obturateur 7 et la deuxième extrémité 5A2 de la première section 5A du conduit de purge 5 peut donc être dépourvue d'élément d'étanchéité. La structure proposée est donc avantageuse de ce fait, en ce qu'une unique liaison étanche est nécessaire pour assurer le bon fonctionnement de l'obturateur 7, ce qui est notamment avantageux en termes de coûts et de fabrication.

Dans l'exemple représenté, l'extrémité libre 72 de l'obturateur 7, l'actionneur 8 et la commande 9 sont au moins partiellement entourés d'un cache 100 rapporté autour du boitier 11 du carter 1, ce cache 100 présentant une ouverture permettant à un utilisateur d'actionner la commande 9 via son extrémité libre 91 par exemple au moyen d'une clé Allen comme indiqué précédemment.

La commande 9 peut être munie de moyens d'indexations tels qu'un ergot coopérant avec une butée formée sur le cache 100 du boitier 11, par exemple afin de maintenir par défaut l'obturateur 7 en position d'obturation et réaliser ainsi un verrouillage permettant de prévenir toute purge non souhaitée.

Le filtre 10 tel que proposé comprend en outre un orifice d'admission secondaire 120 débouchant dans le volume interne du boitier 1. La figure 7 est une vue en coupe du filtre 10 selon un plan médian à l'orifice d'admission secondaire 120 tel que représenté.

Cet orifice d'admission secondaire 120 est aménagé sur le couvercle 12 du boitier 1, et débouche dans le volume interne du boitier 1, dans la zone sale telle que définie précédemment. L'orifice d'admission secondaire 120 est muni d'un clapet de déviation 122 (par exemple un clapet anti retour taré), et forme typiquement une dérivation dans une ligne de circulation de liquide, par exemple de carburant, ou encore de gasoil chaud.

Le clapet de déviation 122 est configuré de manière à être passant uniquement lorsqu'une pression supérieure à une valeur seuil de pression est appliquée. Ainsi, le liquide circulant dans la ligne de circulation de liquide à laquelle l'orifice d'admission secondaire 120 est relié ne pénètre dans le volume interne du boitier 1 que lorsque la pression au sein de cette ligne de circulation dépasse la valeur seuil de pression. Le clapet de déviation122 est par exemple un piston à cire.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un dispositif sont transposables, seules ou en combinaison, à un procédé.

## Revendications

1. Filtre (10) pour la purification d'un liquide de moteur, comprenant
- un boitier (1) définissant un volume interne,
- un élément filtrant (2) disposé au sein du volume interne dudit boitier (1),
le boitier (1) présentant un orifice d'admission (111) et un orifice de refoulement (112) de liquide débouchant chacun dans le volume interne dudit boitier (1), l'orifice d'admission (111) et l'orifice de refoulement (112) étant configurés de manière à définir une circulation de liquide dans laquelle le liquide entrant par l'orifice d'admission (111) passe au travers de l'élément filtrant (2) avant de ressortir par l'orifice de refoulement (112),
ledit boitier (1) présentant en outre un conduit de purge (5) configuré de manière à permettre une purge du liquide présent au sein du volume interne, et un dispositif de purge adapté pour sélectivement obturer ledit conduit de purge (5),
le filtre étant **caractérisé en ce que**
le conduit de purge (5) présente une première portion (5A) et une seconde portion (5B) non alignées l'une par rapport à l'autre, la première portion (5A) présentant une première extrémité (5A1) débouchant dans le volume interne du boitier (1), et une seconde extrémité (5A2) ouverte, et étant reliée à la seconde portion (5B) du conduit de purge (5) via une section intermédiaire entre la première extrémité (5A1) et la seconde extrémité (5A2),
le dispositif de purge comprend un obturateur (7) mobile en translation au sein de la première portion (5A) du conduit de purge (5) entre une position d'obturation dans laquelle l'obturateur obture la première portion (5A) du conduit de purge (5) en amont de la section intermédiaire, et une position ouverte dans laquelle ledit obturateur (7) permet un passage de liquide entre la première portion (5A) et la seconde portion (5B) du conduit de purge (5),
ledit obturateur (7) présente une extrémité libre (72) faisant saillie hors de la première portion (5A) du conduit de purge (5) via sa seconde extrémité (5A2), et est associé via son extrémité libre (72) à un actionneur (8) disposé hors du volume interne du boitier (1) et adapté pour commander la translation de l'obturateur (7) dans la première portion (5A) du conduit de purge (5).

2. Filtre (10) selon la revendication 1, dans laquelle l'extrémité libre (72) de l'obturateur (7) coopère avec l'actionneur (8) de sorte qu'une rotation de l'actionneur (8) entraine une translation de l'obturateur (7).

3. Filtre (10) selon l'une des revendications 1 ou 2, dans lequel l'obturateur (7) est muni d'un joint d'étanchéité (71) adapté pour coopérer avec la première portion (5A) du conduit de purge (5) en amont de sa liaison avec la seconde portion (5B) du conduit de purge (5) de manière à l'obturer lorsque l'obturateur (7) est en position d'obturation.

4. Filtre (10) selon l'une des revendications 1 à 3, dans laquelle l'actionneur (8) présente un limiteur de course entre une position dans laquelle l'obturateur (7) est en position d'obturation et une position dans laquelle l'obturateur (7) est dans une position d'ouverture.

5. Filtre (10) selon l'une des revendications 1 à 4, dans lequel le boitier (1) comprend un cache (100) disposé hors du volume interne, et dans lequel est disposé l'actionneur (8).

6. Filtre (10) selon l'une des revendications 1 à 5, comprenant en outre une commande (9) coopérant avec l'actionneur (8) au moyen de cannelures (85, 95).

7. Filtre (10) selon l'une des revendications 1 à 6, dans lequel le boitier (1) comprend un orifice d'admission secondaire (120) débouchant dans le volume interne du boitier (1), ledit orifice d'admission secondaire (120) étant muni d'un clapet de déviation (122), configuré de manière à être passant lorsqu'une pression supérieure à une valeur seuil de pression est appliquée.

8. Filtre (10) selon l'une des revendications 1 à 7, dans lequel l'élément filtrant (2) comprend un média filtrant (3) disposé entre un flasque inférieur (22) et un flasque supérieur (21), le flasque supérieur (21) étant muni d'un tube (25) traversant s'étendant de part et d'autre du flasque supérieur (21) et adapté pour coopérer avec l'orifice de refoulement (112) du boitier (1), ledit tube (25) traversant comprenant un orifice de dégazage configuré de manière à permettre un passage d'air depuis un volume interne de l'élément filtrant (2) vers l'orifice de refoulement (112) du boitier (1).

9. Véhicule muni d'un filtre (10) selon l'une des revendications 1 à 8.
